# EUROPEAN PATENT SPECIFICATION

(11) **EP 2 741 349 B1**
(45) Date of publication and mention of the grant of the patent: **22.04.2020**
(21) Application number: 13005491.9
(22) Date of filing: 25.11.2013
(51) Int. Cl.: H01M 4/02, H01M 4/04, H01M 4/131, H01M 4/1315, H01M 4/136, H01M 4/36

(54) **Method for preparing a cathode active material for lithium secondary batteries.**
Verfahren zur Herstellung eines aktiven Kathodenmaterials für Lithiumsekundärbatterien.
Procédé de préparation d'un matériau actif our cathodes de batteries secondaires au lithium.

(30) Priority: 07.12.2012 KR 20120142013
(43) Date of publication of application: 11.06.2014
(73) Proprietor: Samsung SDI Co., Ltd., Yongin-si, Gyeonggi-do (KR)
(72) Inventor: CHO, Yunju, 336-725 Chungcheongnam-do (KR); Moon, Jongseok, 336-725 Chungcheongnam-do (KR); Lee, Misun, 336-725 Chungcheongnam-do (KR); Kim, Taehyeon, 336-725 Chungcheongnam-do (KR); Lee, Sunghoon, 336-725 Chungcheongnam-do (KR); Kim, Eui Ho, 336-725 Chungcheongnam-do (KR); Yun, PilSang, 336-725 Chungcheongnam-do (KR)
(74) Representative: Gulde & Partner

(56) References cited:
- EP-A1- 0 872 450
- EP-A1- 1 093 172
- WO-A2-2011/031544
- JP-A- 2000 067 864
- JP-A- 2001 319 653
- US-B2- 6 680 143
- G.H. KIM ET AL.: "IMPROVEMENT OF HIGH VOLTAGE CYCLING BEHAVIOR OF SURFACE-MODIFIED Li [Ni1/3 Co1/3 Mn1/3] O2 CATHODES BY FLUORINE SUBSTITUTION FOR Li-ION BATTERIES", JOURNAL OF THE ELECTROCHEMICAL SOCIETY, vol. 152, no. 9, 21 July 2005 (2005-07-21) , pages A1707-A1713, XP002719306, DOI: 10.1149/11.1952747
- A GUTIERREZ ET AL.: "UNDERSTANDING THE EFFECTS OF CATIONIC AND ANIONIC SUBSTITUTIONS IN SPINEL CATHODES OF LITHIUM-IONTTERIES", JOURNAL OF THE ELECTROCHEMICAL SOCIETY, vol. 160, no. 6, 10 April 2013 (2013-04-10), pages A901-A905, XP002719280, DOI: 10.1149/2.117306jes
- M.M. THACKERAY ET AL: "Comments on the structural complexity of lithium-rich Li1+xM1-xO2 electrodes (M=Mn, Ni, Co) for lithium batteries", ELECTROCHEMISTRY COMMUNICATIONS, vol. 8, no. 9, 1 September 2006 (2006-09-01), pages 1531-1538, XP055557824, NL ISSN: 1388-2481, DOI: 10.1016/j.elecom.2006.06.030

## Description

### CROSS-REFERENCE TO RELATED APPLICATIONS

This application claims priority to and the benefit of Korean Patent Application No. 10-2012-0142013 filed in the Korean Intellectual Property Office on December 7, 2012.

### FIELD

The present invention relates to a method for preparing a cathode active material for a lithium secondary battery. The prepared cathode active material may be used in a secondary battery having a high capacity and a long service life, in which a lithium metal composite oxide including Li₂MnO₃ having a layered structure containing lithium in excess is doped with a fluoro compound and one or more of W, Mo, V and Cr ion having +1 to +6 of multiple oxidation states.

### BACKGROUND ART

As the IT technology is gradually developing, the battery capacity and service life of a lithium ion secondary battery are also developing together, but the development may be a kind of development in cell design based on LCO which is an existing material.

However, high capacity batteries which have been developed based on a cell design show limitation in capacity to be used in recent smart devices and electric vehicles and the like. Therefore, there is a need for a new lithium secondary battery material. A capacity of a secondary battery significantly depends on a cathode active material, and therefore, recently, studies have been conducted on lithium metal composite compounds containing Li₂Mn0₃ having a layered structure containing lithium in excess.

Li₂MnO₃ is a very stable compound as a whole, in which a phase is changed and oxygen is produced in one charge, discharge capacity is significantly lowered even when Li₂Mn0₃ includes Li at a level approximately two times more than an existing material, and Mn has an oxidation number of +4, is a material in which Li is deintercalated only at a high voltage of 4.4 V or more compared to an existing lithium ion secondary battery and moves into an anode, is also a material having a very low electronegativity, and is a material in which it is difficult for capacitance onset to be achieved during rapid charge and discharge, and thus practical application is not still implemented because there are many problems to be solved for the material to be used alone as a cathode active material.

Further, a cathode active material containing Li₂MnO₃ has a problem in that an irreversible reaction as in the following Formula proceeds while Li is deintercalated during an initial charge, and accordingly, Li, which is deintercalated during the initial charge and moves to an anode, fails to be returned again to a cathode during a discharge, and thus the capacity is lowered during an actual charge and discharge, and a problem in that oxygen is generated, and thus pressure in a battery is increased.

Li₂Mn0₃ → 2Li⁺ + MnO₂ + 1/2O₂ → LiMnO₂ + Li⁺ + 1/2O₂

In addition, Li, which fails to be intercalated into the cathode during the discharge, is precipitated on the surface of the anode or forms a nonconductive coating on the surface of the cathode as a result of an side reaction with an electrolyte, thereby causing a problem in that a deintercalation and intercalation rate of lithium is decreased.

Meanwhile, Patent Document 1 proposes a cathode active material including a lithium manganese oxide represented by formula Li₂MnO₃₋ₓAₓ (here, A is an element having an oxidation number of -1 valence and a halogen atom such as fluorine and chlorine, or a transition metal element, and 0 < x < 1) in an amount of 50% by weight or more based on the total weight of the cathode active material, by partially substituting an oxygen element in Li₂MnO₃, which is inexpensive and excellent in structural stability, with an element with a valence of -1.

However, Patent Document 1 only discloses that "since a lithium manganese oxide of Formula 1 according to the present invention may be prepared by, for example, a method including mixing 'a lithium compound' as a lithium supply source, 'a manganese compound' as a manganese supply source, and 'a metal compound containing A' as a doping element supply source in a predetermined content range and subjecting the mixture to heat treatment, and the lithium compound, the manganese compound, the metal compound containing A and the like are publicly known in the art, the description thereof will be omitted in the present specification", but does not disclose a method for preparing such a cathode active material and basic characteristic conditions such as a particle size and a specific surface area of a cathode active material prepared by the method at all.

### [Citation List]

### [Patent : Documents]

(Patent Document 1) KR10-2009-0006897 A

EP 1 093 172 A1 discloses a method for the preparation of an active material for a lithium secondary battery.

### SUMMARY OF THE INVENTION

The present invention has been made in an effort to provide a cathode active material in which the service life of a battery is enhanced by preventing a side reaction of the particle surface of the cathode active material due to charge and discharge at a high voltage of 4.4 V or more with an electrolyte, and a rate capability is enhanced by suppressing the formation of a nonconductive coating produced on a battery electrode plate due to precipitate of the side reaction, and reducing the resistance between the battery electrode plate with the electrolyte.

The present invention has also been made in an effort to provide a cathode active material which may decrease an irreversible capacity to exhibit high capacity, and enhance not only specific capacity but also capacity per volume due to high density of the electrode plate during the manufacture of the electrode plate.

The present invention has also been made in an effort to provide a method for preparing the cathode active material and a secondary battery including the same.

In order to solve the aforementioned problems, the present invention provides the following exemplary embodiments.

The essential technical features of the present invention are explicitly defined in the wording of independent claim 1. Further features of the invention are defined in the wording of dependent claim 2 on file. The description dicloses a cathode active material including Li₂Mn0₃ having a layered structure, and doped with one or more elements with a multiple oxidation state selected from the group consisting of W, Mo, V, and Cr, and a fluoro compound.

In the disclosed cathode, a lithium metal composite compound constituting the cathode active material is a lithium-excess lithium metal composite compound including Li₂Mn0₃ having a layered structure, may be preferably a lithium-excess lithium metal composite compound represented by Formula LiₐNi_{b}Co_{c}Mn_{d}M'_{y}O₂-ₓFₓ (here, M': one or more selected from the group of W, V, Mo, and Cr, 1.1 ≤ a < 1.3, 0 < b ≤ ₀.₅, 0<c<0.7, 0.1 < d < 0.7, 0 < x < 0.15, and 0<y<0.1 ), and may include a rhombohedral LiMO₂ (here, M is Ni, Co, and Mn) and a monoclinic Li₂MnO₃.

In the disclosed cathode, the fluoro compound is LiF or NH₄F, and the cathode active material may be doped with the fluoro compound in an amount from 1% by mol to 10% by mol per equivalent of Li.

When an amount of the fluoro compound added is 1% by mol or less, an effect of adding the fluoro compound is negligible, and when the amount is 10% by mol or more, battery characteristics deteriorate, which is not preferred. When the fluoro compound is added, fluoro substitutes oxygen as in the Formula LiₐNi_{b}Co_{c}Mn_{d}M'_{y}O₂-ₓFₓ (here, M' : one or more selected from the group consisting of W, V, Mo, and Cr, 1.1 ≤ a < 1.3, 0 < b ≤ 0.5, 0<c<0.7 0.1 < d < 0.7, 0 < x < 0.15, and 0<y<0.1).

When the compound is composed of only oxygen, Li, Ni, Co, and Mn have an oxidation number of +1, +2, +3 and +4, respectively. During the discharge in which lithium is deintercalated, an oxidation number of Ni is changed from +2 to +4 and an oxidation number of Co is changed from +3 to +4 in order to balance an average electric charge of the lithium metal oxide while Li moves to the anode, but Mn is in a stabilized state with an oxidation number of +4, and an oxidation number thereof is not changed. However, at 4.4 V or more, oxygen around Mn loses an electron, becomes a neutral oxygen and is discharged as a gas while Li in a transition metal layer around Mn is deintercalated. In this case, in the case of doping with the fluoro compound instead of oxygen, an amount of oxygen produced is reduced by suppressing a change in oxidation number of oxygen at a voltage of 4.4 V while the oxidation number of Mn is oxidized from +4 to +4 or more, and the spacing between crystal lattices of the transition metal composite oxide is increased because the atomic radius of fluoro is smaller than that of oxygen, thereby facilitating deintercalation and intercalation of Li.

When the surface of the cathode active material is coated with a fluoro compound such as LiF, NH₄F, ZrF₄, and AlF₃, it is difficult to expect a phenomenon of an increase in capacity through a change in oxidation number of Mn and an effect of suppressing the production of oxygen, by substituting oxygen as in the present invention as an effect of suppressing the side reaction of the electrolyte and the cathode active material.

The cathode active material may be doped with the element with a multiple oxidation state in an amount of 0.1 mol or less.

When an amount of the element doped is larger than 0.1 mol, doping is not achieved in a crystal structure of the cathode active material, and the element appears as a secondary phase, thereby causing a problem in that the capacity and rate capability of the battery deteriorate.

When W, Mo, V, and Cr elements are doped as anions along with F, the press density is increased as compared to the case in which the elements are not added at the same temperature, and thus it is preferred that the press density of the cathode active material is set to 2.5 g/cc or more by adding the anions in an appropriate amount as described above. However, when the amounts of W, Mo, V and Cr along with F, which are added to increase the press density to 3.5 g/cc or more, are increased, the capacity and rate capability of the battery deteriorate, which is not preferred. In addition, when F, or W, Mo, V, and Cr are not added, the energy density is lowered to 2.2 g/cc or less.

The press density exhibited high correlation with the size compactness of the particles, and it could be experimentally understood that the press density has a proportional relationship with the heat treatment temperature. However, in the case of a heat treatment at a high temperature of 800°C or more, it was found that capacity characteristics deteriorate while the size of primary particles is increased and the size of secondary particles as an aggregate of the primary particles is increased, and thus a heat treatment may not be performed at a temperature of 800°C or more in order to improve the press density, and as a result of a heat treatment at 600°C or less in order to secure capacity characteristics, capacity characteristics did not deteriorate, but a problem in that service life characteristics deteriorated occurred.

Accordingly, in the present invention, heat treatment is performed at a low temperature such that gas in the particles is discharged during the heat treatment process and compactness is enhanced while pores are slowly closed, and in this case, in order to prevent battery service life characteristics from deteriorating by securing the crystallinity even at a low temperature, doping is simultaneously performed with a fluoro compound and a metal ion with a multiple oxidation state such as W, Mo, V, and Cr.

In the case of doping with a fluoro compound, it could be confirmed through TG-DTA that the temperature at which a solid-solution reaction with a precursor composed of Li₂CO₃ and a transition metal hydroxide initiates is decreased by approximately 100°C when a fluoro compound is added, and even when only the fluoro compound is added, there was an effect of enhancing the press density, but the particle compactness was further greatly enhanced in the case of doping the fluoro compound and a metal ion such as W, Mo, V and Cr.

Accordingly, in the present invention, it is possible to prepare a cathode active material with improved particle compactness at a low temperature from 600°C to 800°C, and as a result of manufacturing an electrode using the powder and measuring a press density, it was possible to obtain a high value of 2.5 g/cc or more, and also possible to obtain a specific capacity of 250 mAh/g or more.

The result is distinguished from the case in which a fluoro compound is coated on the surface of the cathode active material in which lithium is solid-dissolved, and when a coating which controls the surface of the cathode active material is performed, the specific capacity is rather decreased, and the press density tends to be maintained or decreased.

In addition, in the present invention, the amount of oxygen produced during the primary charging may be decreased by doping with various materials with an oxidation number from 1 to 6, such as W, Mo, V and Cr, and thereafter, the irreversible capacity may also be decreased by decreasing the amount of lithium which has not been intercalated into the cathode, thereby ultimately enhancing the capacity. Furthermore, in the case of doping with a fluoro component and a material with a multiple oxidation number, the press density of the cathode active material may be secured at 2.5 g/cc or more, and energy density as a capacity per volume may also be improved.

The present invention provides a method for preparing a cathode active material including Li₂Mn0₃ having a layered structure, the method including: synthesizing a transition metal compound precursor; and mixing one or more elements with a multiple oxidation state selected from the group consisting of W, Mo, V, and Cr, a fluoro compound, a lithium supply source, and the transition metal compound precursor, and then heat-treating the mixture at 600°C to 800°C, the essential technical features of which are explicitly defined in the wording of the independent claim 1 on file.

The lithium metal composite compound according to the exemplary embodiment of the present invention is a lithium-excess lithium metal composite compound including Li₂Mn0₃ having a layered structure, and may be preferably represented by Formula LiₐNi_{b}Co_{c}Mn_{d}M'_{y}O₂-ₓFₓ (here, M': one or more of W, V, Mo, and Cr, 1.1 ≤ a < 1.3, 0 < b ≤ 0.5, 0<c<0.7, 0.1 < d < 0.7, 0 < x < 0.15, and 0<y<0.1).

The lithium metal composite compound having the composition is prepared by synthesizing a precursor which is a transition metal hydroxide in the form of a hydroxide, mixing Li₂CO₃ or LiOH as a lithium supply source, LiF or NH₄F as a fluoro compound, and one or more elements with a multiple oxidation state of W, V, Mo, and Cr having an oxidation number from 1 to 6, and then heat-treating the mixture in a temperature range from 600°C to 800°C.

In order to synthesize a precursor in the form of a transition metal hydroxide, an aqueous solution is prepared by dissolving one of nickel sulfate, nickel nitrate, and nickel carbonate in the form of a salt which is dissolved in water, one of cobalt sulfate, cobalt nitrate, and cobalt carbonate, and one of manganese sulfate, manganese nitrate, and manganese carbonate at a predetermined molar concentration, and then the precursor is precipitated in the form of a hydroxide at a pH of to 12 using a base such as NaOH, NH₄OH, and KOH. In this case, when the pH is less than 10, the particle aggregation rate is larger than the nucleus production rate of particles, and thus the size of particles grows to 3 µm or more, and when the pH is more than 12, the nucleus production rate of particles is larger than the particle aggregation rate, and thus particles are not aggregated, thereby making it difficult to obtain a transition metal hydroxide in which each component of Ni, Co, and Mn is homogenously contained. the transition metal compound precursor is synthesized within a range of a pH from 10 to 12.

During a precursor co-precipitation process, when a precipitate is obtained at a pH of 6 to 9 using a carbonate such as NaHCO₃, Na₂CO₃, (NH₄)₂CO₃, K₂CO₃, and CaCO₃ and a transition metal carbonate precursor in the form of -CO₃ is synthesized, a high press density may not be implemented. The reason is that in the process of heat-treating the precursor, a lithium salt, a fluoro compound and a doping metal element, carbonic acid contained in the precursor produces pores not only on the surface but also the inside of the cathode active material in the process in which carbonic acid is decomposed into carbon dioxide and oxygen during the heat treatment, thereby reducing the compactness of a powder particle.

SO₄²⁻, NH₄⁺, NO₃⁻, Na⁺, and K⁺ which are adsorbed on the surface of the thus precipitated powder are washed several times using distilled water, thereby synthesizing a high-purity transition metal hydroxide precursor. The thus synthesized transition metal hydroxide precursor is dried in an oven at 150°C for 24 hours or more so as to have a moisture content of 0.1 wt% or less.

The thus prepared transition metal compound precursor may be in the form of a transition metal hydroxide represented by Formula NiₐCo_{b}Mn_{c}(OH)₂ (0.1 ≤ a < 0.5, 0<b<0.7 0.2 ≤ c < 0.9, and a + b + c = 1).

It is possible to prepare a lithium metal composite compound by homogenously mixing the completely dried transition metal hydroxide precursor, Li₂CO₃ or LiOH as a lithium supply source, LiF or NH₄F as a fluoro compound, with one or more elements with a multiple oxidation state of W, V, Mo, and Cr having an oxidation number from 1 to 6, and then heat-treating the mixture.

It could be confirmed that at a temperature of 600°C or less, Li₂CO₃ and a transition metal compound were not solution-dissolved, and thus a secondary phase was produced as a result of the identification with XRD, the particle size was grown to 5 µm or more at 800°C or more and battery characteristics deteriorated, and the heat treatment is performed in a range from 600°C to 800°C.

Furthermore, the fluoro compound is LiF or NH₄F, and the cathode active material is doped with the fluoro compound in an amount from 1% by mol to 10% by mol per equivalent of Li.

When an amount of the fluoro compound added is 1% by mol or less, an effect of adding the fluoro compound is negligible, and when the amount is 10% by mol or more, battery characteristics deteriorate, which is not preferred.

The cathode active material is doped with the multivalent element in an amount of 0.1 mol or less.

When an amount of the element added is larger than 0.1 mol, doping is not achieved in a crystal structure of the cathode active material, and the element appears as a secondary phase, thereby causing a problem in that the capacity and rate capability of the battery deteriorate.

The description discloses a lithium secondary battery including: a cathode including the cathode active material; an anode including an anode active material; and an electrolyte present between the cathode and the anode.

The cathode active material prepared according to the present invention has a high specific capacity and a high press density and thus has a high energy density of a battery and an excellent lifespan and a high rate capability.

That is, in a lithium secondary battery in which the cathode active material prepared according to the present invention is used, the service life of the battery may be enhanced by reducing a side reaction of the particle surface of the cathode active material with an electrolyte due to charge and discharge at a high voltage of 4.4 V or more, and a rate capability may be enhanced by suppressing the formation of a nonconductor thin film produced on an electrode plate of the battery due to precipitate of the side reaction, and reducing the resistance between the electrode plate of the battery and the electrolyte. Further, high capacity may be exhibited by reducing an irreversible capacity, and when an electrode plate of the battery is manufactured, not only a specific capacity but also a capacity per volume are increased due to high density of the electrode plate of the battery.

### DETAILED DESCRIPTION

### <Cathode active material>

The cathode active material prepared by the method of the present invention includes Li₂MnO₃ having a layered structure, and is doped with one or more elements with a multiple oxidation state selected from the group consisting of W, Mo, V, and Cr, and a fluoro compound.

A lithium metal composite compound constituting the cathode active material is a lithium-excess lithium metal composite compound including Li₂Mn0₃ having a layered structure, is preferably a lithium-excess lithium metal composite compound represented by Formula LiₐNi_{b}CO_{c}Mn_{d}M'_{y}O₂-ₓFₓ (here, M': one or more selected from the group of W, V, Mo, and Cr, 1.1 ≤ a < 1.3, 0 < b ≤ 0.5, 0<c<0.7, 0.1 < d < 0.7, 0 < x < 0.15, and 0<y<0.1), and may include a rhombohedral LiMO₂ (here, M is Ni, Co, and Mn) and a monoclinic Li₂MnO₃.

The fluoro compound is LiF or NH₄F, and is mixed in an amount from 1% by mol to 10% by mol per equivalent of Li.

The cathode active material is doped with the multivalent element in an amount of 0.1 mol or less.

The aforementioned cathode active material is prepared by the method according to the present invention.

### <Preparation method of cathode active material>

The method according to the present invention is used for preparing a cathode active material including Li₂Mn0₃ having a layered structure, the method including: synthesizing a transition metal compound precursor; and mixing one or more elements with a multiple oxidation state selected from the group consisting of W, Mo, V, and Cr, a fluoro compound, a lithium supply source, and the transition metal compound precursor, and then heat-treating the mixture at 600°C to 800°C.

The cathode active material is represented by Formula LiₐNi_{b}CO_{c}Mn_{d}M'_{y}O₂-ₓFₓ (here, M': one or more selected from the group consisting of W, V, Mo, and Cr, 1.1 ≤ a < 1.3, 0 < b ≤ 0.5, 0<c<0.7, 0.1 < d < 0.7, 0 < x < 0.15, and 0<y<0.1).

The lithium metal composite compound having the composition is prepared by synthesizing a precursor as a transition metal hydroxide in the form of a hydroxide, mixing the synthesized precursor, a lithium supply source, a fluoro compound, and an element with a multiple oxidation state, and then heat-treating the mixture in a temperature range from 600°C to 800°C.

The transition metal compound precursor is synthesized within a range of a pH from 10 to 12, and is in the form of a transition metal hydroxide represented by Formula NiₐCO_{b}Mn_{c}(OH)₂ (0.1 ≤ a < 0.5, 0<b<0.7, 0.2 ≤ c < 0.9, and a + b + c = 1).

A lithium metal composite compound is prepared by homogenously mixing the completely dried transition metal hydroxide precursor, Li₂CO₃ or LiOH as a lithium supply source, LiF or NH₄F as a fluoro compound in an amount from 1% by mol to 10% by mol per equivalent of Li, and one or more elements with a multiple oxidation state of W, V, Mo, and Cr having an oxidation number from 1 to 6 in an amount of 0.1 mol or less, and then heat-treating the mixture at 600°C to 800°C.

### <Lithium secondary battery including cathode active material>

Since the cathode active material prepared by the process according to the present invention may be utilized as a cathode material for a lithium secondary battery, has the same structure as a publicly known secondary battery except for the cathode active material composition, the crystal structure and the like, and may be prepared by the same publicly known preparation method, the detailed description thereof will be omitted.

Hereinafter, with reference to accompanying drawings, a method for preparing the cathode active material according to the present invention and a lithium secondary battery including the cathode active material prepared by the method will be described in detail through preferred Examples and Comparative Examples. However, these Examples are only a preferred embodiment of the present invention, and it should not be interpreted that the present invention is limited by the Examples.

### [Example 1]

① Synthesis of transition metal hydroxide precursor A transition metal mixed solution is prepared such that the molar ratio of Ni : Co : Mn is a composition of 2 : 2 : 6.The thus prepared transition metal mixed solution has a pH of 5, and is injected into a continuous reactor, which is controlled at a pH of 11, at a predetermined rate. In this case, the pH is maintained to be 11 using NH₄OH and NaOH, and the reaction time is controlled such that the solution stays in the continuous reactor for approximately 10 hours. In this case, the reactor temperature is controlled to 40°C, and N₂ gas is injected into the reactor such that a transition metal hydroxide precipitate is not oxidized. In order to remove aqueous ions which are adsorbed on the surface of the thus synthesized transition metal hydroxide powder, washing is repeatedly performed using distilled water, and a transition metal hydroxide precursor is obtained by filtering the powder using a filter paper, and then drying the filtered powder in an oven at 150°C. The composition of the transition metal hydroxide precursor may be represented by Formula NiₐCo_{b}Mn_{c}(OH)₂ (0.1 ≤ a < 0.5, 0<b<0.7, 0.2 ≤ c < 0.9, and a + b + c = 1).

### ② Synthesis of lithium metal composite oxide (cathode active material)

A lithium metal composite oxide powder is obtained by mixing the transition metal hydroxide precursor synthesized in ①, mixing Li₂CO₃, LiF, and WCl₄ as in the following Table 1, increasing the temperature at a rate of 2°C/min, and firing the resulting mixture at 750°C for 10 hours.

### ③ Evaluation of battery characteristics

In order to evaluate an initial charge and discharge capacity and a service life characteristic, a slurry is prepared by mixing the cathode active material synthesized in ②, Denka Black as a conductive material, and polyvinylidene fluoride (PVDF) as a binder at a ratio of 92 : 4: 4.A cathode electrode plate is manufactured by uniformly coating the slurry on an aluminum (Al) foil.

A coin cell is manufactured using a lithium metal as an anode and a solution with 1.3M LiPF6 EC /DMC / EC = 5 : 3 : 2 as an electrolyte, and the results in which the following items are measured are shown in the following Table 2.
* Battery capacity: performing charge and discharge at 0.1 C, and 2.5 V to 4.7 V
* High rate capability: (discharge capacity at 3 C /discharge capacity at 0.33 C) * 100, at 2.5 V to 4.6 V
* Service life characteristic: (discharge capacity after charge and discharge 50 times /initial discharge capacity) * 100, performing charge and discharge at 1 C, and 2.5 V to 4.6 V
* press density: (weight of electrode - weight of current collector foil) / (cross-sectional area of electrode * (thickness of electrode - thickness of foil))
* Energy density: primary discharge capacity * press density * 0.92 (0.92: ratio of active material in active material + conductive material + binder during manufacture of electrode)

### [Example 2]

A lithium metal composite oxide powder is obtained by using the same transition metal hydroxide precursor as in Example 1, mixing the precursor, Li₂CO₃, LiF, and WCl₄ as in the following Table 1, increasing the temperature at a rate of 2°C/min, and firing the resulting mixture at 750°C for 10 hours, and the result evaluated in the same manner is shown in the following Table 2.

### [Example 3]

A lithium metal composite oxide powder is obtained by using the same transition metal hydroxide precursor as in Example 1, mixing the precursor, Li₂CO₃, LiF, and WCl₄ as in the following Table 1, increasing the temperature at a rate of 2°C/min, and firing the resulting mixture at 750°C for 10 hours, and the result evaluated in the same manner is shown in the following Table 2.

### [Example 4]

A lithium metal composite oxide powder is obtained by using the same transition metal hydroxide precursor as in Example 1, mixing the precursor, Li₂CO₃, LiF, and MoCl3 as in the following Table 1, increasing the temperature at a rate of 2°C/min, and firing the resulting mixture at 750°C for 10 hours, and the result evaluated in the same manner is shown in the following Table 2.

### [Example 5]

A lithium metal composite oxide powder is obtained by using the same transition metal hydroxide precursor as in Example 1, mixing the precursor, Li₂CO₃, LiF, and VCl₃ as in the following Table 1, increasing the temperature at a rate of 2°C/min, and firing the resulting mixture at 750°C for 10 hours, and the result evaluated in the same manner is shown in the following Table 2.

### [Example 6]

A lithium metal composite oxide powder is obtained by using the same transition metal hydroxide precursor as in Example 1, mixing the precursor, Li₂CO₃, LiF, and CrCl₃ as in the following Table 1, increasing the temperature at a rate of 2°C/min, and firing the resulting mixture at 750°C for 10 hours, and the result evaluated in the same manner is shown in the following Table 2.

### (Comparative Example 1)

A lithium metal composite oxide powder is obtained by using the same transition metal hydroxide precursor as in Example 1, mixing the precursor, Li₂CO₃ and WCl₄ as in the following Table 1, increasing the temperature at a rate of 2°C/min, and firing the resulting mixture at 750°C for 10 hours, and the result evaluated in the same manner is shown in the following Table 2.

### (Comparative Example 2)

A lithium metal composite oxide powder is obtained by using the same transition metal hydroxide precursor as in Example 1, mixing the precursor, Li₂CO₃ and LiF as in the following Table 1, increasing the temperature at a rate of 2°C/min, and firing the resulting mixture at 750°C for 10 hours, and the result evaluated in the same manner is shown in the following Table 2.

### (Comparative Example 3)

A lithium metal composite oxide powder is obtained by using the same transition metal hydroxide precursor as in Example 1, mixing the precursor and Li₂CO₃ as in the following Table 1, increasing the temperature at a rate of 2°C/min, and firing the resulting mixture at 750°C for 10 hours, and the result evaluated in the same manner is shown in the following Table 2.

### (Comparative Example 4)

A lithium metal composite oxide powder is obtained by using the same transition metal hydroxide precursor as in Example 1, mixing the precursor and Li₂CO₃ as in the following Table 1, and firing the mixture at 750°C for 10 hours. Thereafter, 4.0 g of LiF is uniformly coated on the surface of the powder subjected to firing, and heat treatment is performed at 400°C such that the coating powder is adhered well, and the result evaluated in the same manner is shown in the following Table 2.

**[Table 1]**

| | Li₂CO₃ (g) | LiF (g) | W, Mo, Cr, V (g) | Precursor (g) |
|---|---|---|---|---|
| Example 1 | 17 | 0.5 | WCl₄ : 1.30 | 29 |
| Example 2 | 19 | 0.6 | WCl₄ : 13.02 | 29 |
| Example 3 | 17 | 1.2 | WCl₄ : 1.30 | 28 |
| Example 4 | 17 | 0.5 | MoCl₃ : 0.79 | 28 |
| Example 5 | 17 | 0.5 | VCl₃ : 0.61 | 28 |
| Example 6 | 17 | 0.5 | CrCl₃ :0.62 | 28 |
| Comparative Example 1 | 17 | 0 | WCl₄ : 1.30 | 29 |
| Comparative Example 2 | 17 | 0.5 | 0 | 29 |
| Comparative Example 3 | 17 | 0 | 0 | 29 |
| Comparative Example 4 | 17 | 0 | 0 | 29 |

**[Table 2]**

| | Primary charge capacity (a) (mAh/g) | Primary discharge capacity (b) (mAh/g) | Irreversible capacity (a-b) | press density (g/cc) | Energy density (mAh/cc) | High rate capability (%) | Lifespan (%) |
|---|---|---|---|---|---|---|---|
| Example 1 | 302 | 273 | 29 | 2.89 | 725.9 | 83 | 93 |
| Example 2 | 298 | 225 | 73 | 3.35 | 693 | 68 | 90 |
| Example 3 | 309 | 275 | 34 | 2.82 | 713.5 | 81 | 92 |
| Example 4 | 304 | 273 | 31 | 2.81 | 705.8 | 81 | 92 |
| Example 5 | 304 | 271 | 33 | 2.83 | 705.6 | 83 | 90 |
| Example 6 | 307 | 268 | 39 | 2.79 | 687.9 | 80 | 93 |
| Comparative Example 1 | 299 | 211 | 88 | 2.72 | 528.0 | 77 | 63 |
| Comparative Example 2 | 298 | 264 | 34 | 2.38 | 578.1 | 82 | 71 |
| Comparative Example 3 | 278 | 269 | 9 | 2.26 | 559.3 | 75 | 65 |
| Comparative Example 4 | 278 | 264 | 14 | 2.26 | 548.9 | 75 | 72 |

As can be seen from the above Table 2, it can be known that when compared to Comparative Example 1 in which the lithium metal composite oxide powder is not doped with the fluoro compound, Comparative Example 2 in which the lithium metal composite oxide powder is not doped with the element with a multiple oxidation state, and Comparative Example 3 in which the lithium metal composite oxide powder is doped with none of them, the press density, high rate capability and service life characteristics in Examples 1 to 6 are overall enhanced.

Furthermore, it can be confirmed that in the case of Comparative Example 4 in which the lithium metal composite oxide powder is not doped with the fluoro compound and the surface thereof is coated with the fluoro compound, the effect according to the Examples of the present invention may not be obtained.

## Claims

1. A method for preparing a cathode active material comprising Li₂MnO₃ having a layered structure, wherein the cathode active material is a lithium-excess lithium metal composite compound represented by Formula LiₐNi_{b}Co_{c}Mn_{d}M'_{y}O₂-ₓFₓ (here, M': one or more selected from the group consisting of W, V, Mo, and Cr, 1.1 ≤ a < 1.3, 0 < b ≤ 0.5, 0 < c < 0.7, 0.1 < d < 0.7, 0 < x < 0.15, and 0 < y < 0.1), the method comprising the steps of:
a) synthesizing a transition metal compound precursor represented by Formula Ni-ₐCO_{b}Mn_{c}(OH)₂ (0.1 ≤ a < 0.5, 0 < b < 0.7, 0.2 ≤ c < 0.9, and a + b + c = 1) by preparing an aqueous solution including one of nickel sulfate, nickel nitrate, and nickel carbonate, one of cobalt sulfate, cobalt nitrate, and cobalt carbonate, and one of manganese sulfate, manganese nitrate, and manganese carbonate at a predetermined molar concentration, and then precipitating the precursor in the form of a hydroxide at a pH in the range of 10 to 12 using a base; and
b) mixing one or more elements with a multiple oxidation state selected from the group consisting of W, Mo, V, and Cr having an oxidation number from 1 to 6, LiF or NH₄F as a fluoro compound, Li₂CO₃ or LiOH as a lithium supply source, and the transition metal compound precursor, and then heat-treating the mixture at 600°C to 800°C,
wherein the cathode active material is doped with the element with a multiple oxidation state in an amount of 0.1 mol or less and
wherein the cathode active material is doped with the fluoro compound in an amount from 1% by mol to 10% by mol per equivalent of Li.

2. The method of claim 1, wherein the cathode active material has a press density of 2.5 g/cc or more.

## Patentansprüche

1. Verfahren zur Herstellung eines aktiven Kathodenmaterials, das Li₂Mn0₃ mit einer Schichtstruktur umfasst, wobei das aktive Kathodenmaterial eine Lithium-Metall-Kompositverbindung mit Lithiumüberschuss, dargestellt durch die Formel LiₐNi_{b}Co_{c}Mn_{d}M'_{y}C'₂-ₓFₓ, ist (wobei M': eines oder mehrere, ausgewählt aus der Gruppe bestehend aus W, V, Mo und Cr, 1,1 ≤ a < 1,3, 0 < b ≤ 0, 5, 0 < c < 0,7, 0,1 < d < 0, 7, 0 < x < 0,15 und 0 < y < 0,1), wobei das Verfahren folgende Schritte umfasst:
a) Synthetisieren eines Übergangsmetallverbindungsvorläufers, dargestellt durch die Formel NiₐCo_{b}Mn_{c} (OH)₂ (0,1 ≤ a < 0,5, 0 < b < 0,7, 0,2 ≤ c < 0,9 und a + b + c = 1) durch Herstellen einer wässrigen Lösung, die eines aus Nickelsulfat, Nickelnitrat und Nickelcarbonat, eines aus Cobaltsulfat, Cobaltnitrat und Cobaltcarbonat und eines aus Mangansulfat, Mangannitrat und Mangancarbonat mit einer vorgegebenen Molkonzentration umfasst, und nachfolgend Abscheiden des Vorläufers in Form eines Hydroxids bei einem pH-Wert im Bereich von 10 bis 12 unter Benutzung einer Base; und
b) Mischen eines oder mehrerer Elemente mit mehreren Oxidationsstufen, ausgewählt aus der Gruppe bestehend aus W, Mo, V und Cr, mit einer Oxidationszahl von 1 bis 6, LiF oder NH₄F als einer Fluorverbindung, Li₂CO₃ oder LiOH als einer Lithiumzufuhrquelle und des Übergangsmetallverbindungsvorläufers und nachfolgend Wärmebehandeln des Gemischs bei 600 °C bis 800 °C,
wobei das aktive Kathodenmaterial mit dem Element mit mehreren Oxidationsstufen in einer Menge von 0,1 Mol oder weniger dotiert ist und
wobei das aktive Kathodenmaterial mit der Fluorverbindung in einer Menge von 1 Mol-% bis 10 Mol-% pro Li-Äquivalent dotiert ist.

2. Verfahren nach Anspruch 1, wobei das aktive Kathodenmaterial eine Pressdichte von 2,5 g/cm³ oder mehr aufweist.

## Revendications

1. Procédé de préparation d'un matériau actif de cathode comprenant Li₂MnO₃ ayant une structure stratifiée, dans lequel le matériau actif de cathode est un composé composite lithium-métal avec un excès de lithium représenté par la formule LiₐNi_{b}Co_{c}Mn_{d}M'_{y}O₂-ₓFₓ (où, M' : un ou plusieurs choisis dans le groupe constitué de W, V, Mo et Cr, 1,1 < a ≤ 1,3, 0 < b ≤ 0,5, 0 < c < 0,7, 0,1 < d < 0,7, 0 < x < 0,15 et 0 < y < 0,1), le procédé comprenant les étapes de :
a) synthèse d'un précurseur de composé de métal de transition représenté par la formule NiₐCO_{b}Mn_{c}(OH)₂ (0,1 ≤ a < 0,5, 0 < b < 0,7, 0,2 ≤ c < 0,9, et a + b + c = 1) par préparation d'une solution aqueuse comprenant l'un parmi le sulfate de nickel, le nitrate de nickel et le carbonate de nickel, l'un parmi le sulfate de cobalt, le nitrate de cobalt et le carbonate de cobalt, et l'un parmi le sulfate de manganèse, le nitrate de manganèse et le carbonate de manganèse à une concentration molaire prédéterminée, puis précipitation du précurseur sous la forme d'un hydroxyde à un pH dans la plage de 10 à 12 en utilisant une base ; et
b) mélange d'un ou plusieurs éléments ayant un état d'oxydation multiple choisis dans le groupe constitué de W, Mo, V et Cr ayant un nombre d'oxydation de 1 à 6, de LiF ou NH₄F en tant que composé fluoro, de Li₂CO₃ ou LiOH en tant que source d'approvisionnement en lithium, et du précurseur de composé de métal de transition, puis traitement thermique du mélange à 600°C à 800°C,
dans lequel le matériau actif de cathode est dopé avec l'élément ayant un état d'oxydation multiple en une quantité de 0,1 mol ou moins et
dans lequel le matériau actif de cathode est dopé avec le composé fluoro en une quantité de 1 % en mol à 10 % en mol par équivalent de Li.

2. Procédé selon la revendication 1, dans lequel le matériau actif de cathode a une masse volumique pressée de 2,5 g/cm³ ou plus.
